# EUROPÄISCHE PATENTSCHRIFT

(11) **EP 2 137 442 B1**
(45) Veröffentlichungstag und Bekanntmachung des Hinweises auf die Patenterteilung: **01.12.2010**
(21) Anmeldenummer: 08716654.2
(22) Anmeldetag: 20.03.2008
(51) Int. Cl.: F16K 31/06, H01F 7/126, H01F 7/16

(54) **ELEKTROMAGNETVENTIL SOWIE VERFAHREN ZUR HERSTELLUNG EINES ELEKTROMAGNETVENTILS**
ELECTROMAGNET VALVE AND METHOD FOR PRODUCING AN ELECTROMAGNET VALVE
SOUPAPE ÉLECTROMAGNÉTIQUE ET PROCÉDÉ DE PRODUCTION

(30) Priorität: 14.04.2007 DE 102007017674; 22.06.2007 DE 102007028910
(43) Veröffentlichungstag der Anmeldung: 30.12.2009
(73) Patentinhaber: Pierburg GmbH, 41460 Neuss (DE)
(72) Erfinder: zURKE, Janusz, 47638 Straelen (DE)
(74) Vertreter: Patentanwälte ter Smitten
(86) Internationale Anmeldenummer: PCT/EP2008/002244
(87) Internationale Veröffentlichungsnummer: WO 2008/125179

(56) Entgegenhaltungen:
- DE-A1- 10 146 497
- DE-A1- 10 162 794
- DE-B- 1 157 869
- DE-B- 1 175 793
- GB-A- 2 178 599
- US-A- 6 076 550

## Beschreibung

Die Erfindung betrifft ein Elektromagnetventil mit einem Gehäuse und einem elektromagnetischen Kreis, der aus einer auf einen Spulenträger gewickelten Spule, einem Anker, einem Kern, einem Rückschlussblech und einem Joch besteht, wobei der bewegliche Anker radial innerhalb des Spulenträgers angeordnet und gelagert ist und zumindest indirekt mit einem Verschlussglied verbunden ist, welches einen Ventilsitz zwischen einem Einlasskanal und einem Auslasskanal beherrscht, wobei der Anker und der Kern radial innerhalb einer Lagerbuchse angeordnet sind, die radial innerhalb des Spulenträgers angeordnet ist sowie ein Verfahren zur Herstellung eines derartigen Elektromagnetventils.

Für Elektromagnetventile sind viele unterschiedliche Anwendungsbereiche in Verbrennungskraftmaschinen bekannt. So werden Elektromagnetventile sowohl in pneumatischen als auch in hydraulischen Kreisen in Fahrzeugen eingesetzt, so in Bremsanlagen, Getriebesystemen oder auch Einspritzanlagen. Ihre Verwendung erstreckt sich von der Regelung des Druckes bei pneumatischen Stellern bis hin zur Bypassregelung als Schubumluftventile von Turboladern. Je nach Einsatzbereich sind diese Elektromagnetventile entweder als Auf-/Zu-Ventile oder aber als Regelventile ausgeführt. Insbesondere bei einem Einsatz als Regel- oder Steuerventil ist es wichtig, einen koaxialen Versatz des Ankers im Magnetkreis zu verhindern, da hierdurch Radialkräfte erzeugt werden, die die gewünschten axialen Kräfte negativ beeinflussen.

Ein derartiges Elektromagnetventil nach dem Stand der Technik wird in der DE 42 05 565 C2 offenbart. Der hierin beschriebene elektropneumatische Druckwandler weist einen in eine Gewindebuchse eingeschraubten Kern auf, wobei die Gewindebuchse einteilig mit dem Rückschlussblech ausgeführt werden kann. Der Anker ist in einer DU-Buchse gelagert, welche wiederum in einer Stahlbuchse angeordnet ist, die innerhalb des Spulenträgers eingepresst ist. Fluchtungsfehler zwischen den den Anker führenden bzw. den Kern fixierenden Bauteilen führen zu einem nicht zu vernachlässigendem Koaxialfehler des Ankers zum Kern. Zusätzlich bewirken Verformungen des Spulenträgers durch das Wickeln der Spule, den Zusammenbau des elektromagnetischen Kreises oder das Spritzen des Gehäuses eine weitere Verstärkung dieses Koaxialfehlers. Einer Gesamtverformung wird zwar durch die stabilisierenden Bauteile der Stahlbuchse bzw. der DU-Buchse entgegengewirkt, jedoch ist ein koaxialer Versatz zwischen Kern und Anker hierdurch nicht auszuschließen.

Bekannt ist des Weiteren eine Ausführung eines elektromagnetischen Steuerventils gemäß der DE 101 46 497 A1, bei der ein hohlzylindrischer Anker direkt in einem entsprechend ausgeführten Spulenträger gelagert wird, der somit als Gleitlager für den Anker dient und aus spritzgegossenem Kunststoff besteht. Bei einer derartigen Ausführung ist es jedoch erforderlich, dass der Spulenträger nach dem Spritzen bewickelt wird und auch der weitere Zusammenbau des Ventils nach dem Einspritzvorgang vollzogen wird, was erneut zu deutlichem Verzug des Spulenträgers führt und somit einen koaxialen Versatz zwischen dem Anker und dem Kern bewirkt, der zu unerwünschten Radialkräften im Spalt zwischen Anker und Kern führt.

Zur Vermeidung dieses Koaxialfehlers wird in der DE 40 39 324 A1 vorgeschlagen eine Lagerbuchse in den Spulenträger einzupressen. Radial innerhalb der Lagerbuchse sind an den entgegengesetzten axialen Enden ein feststehendes Ventilteil und ein Polstück angeordnet, in denen wiederum je ein Lagerring zur Lagerung des Ankers angeordnet ist. Da diese Bauteile nach dem Einpressen der Lagerbuchse eingebracht werden müssen und auch der weitere Zusammenbau in folgenden Fertigungsschritten erfolgt, ist ein hierdurch entstehender Koaxialversatz insbesondere der Lagerringe zueinander erneut nicht auszuschließen.

GB 2178599 A offenbart ein Elektromagnetventil und ein Verfahren zur Herstellung eines Elektromagnetventils gemäß dem Oberbegriff des Anspruchs 1, bzw. 10.

Es ist daher Aufgabe der Erfindung, ein Elektromagnetventil sowie ein Verfahren zur Herstellung eines derartigen Elektromagnetventils bereitzustellen, mit dem die auftretenden Koaxialfehler zuverlässig minimiert werden, ohne die Anzahl der Bauteile zu erhöhen. Hierdurch soll ein verbessertes und verschleißärmeres sowie kostengünstigeres Elektromagnetventil bereitgestellt werden.

Diese Aufgabe wird durch ein Elektromagnetventil gelöst, bei dem die Lagerbuchse durch in den bewickelten Spulenträger und axial gegen das Joch eingespritzten Kunststoff gebildet ist. Eine derartig hergestellte Buchse kann nach dem Spritzen des Gehäuses auch bei vorhandenen Hinterschnitten zwischen Joch und Rückschlussblech erfolgen. Eine erhöhte Stabilität der Buchse ist in diesem Fall nicht mehr erforderlich, da im Folgenden keine weiteren zu Verzug führenden Belastungen entstehen. So kann auf kostengünstige Weise ein koaxialer Versatz zwischen Kern und Anker zuverlässig vermieden werden, ohne zusätzliche Bauteile zur Stabilisierung zu benötigen.

Auch wird diese Aufgabe durch ein Verfahren zur Herstellung eines Elektromagnetventils gelöst, bei dem die Lagerbuchse nach dem Wickeln der Spule auf den Spulenträger und dem Zusammenbau von Spulenträger, Joch und Rückschlussblech durch Einspritzen von Kunststoff in den Spulenträger hergestellt wird und der Anker und der Kern anschließend radial innerhalb der Lagerbuchse angeordnet werden. Hierdurch kann ein Koaxialversatz zwischen Kern und Anker zuverlässig vermieden werden. Dadurch, dass dies als letzter Fertigungsschritt vollzogen wird, wird ein nachträgliches Verziehen der Lagerbuchse durch thermische oder mechanische Kräfte verhindert.

Vorzugsweise ist die Lagerbuchse axial an einem ersten Ende durch einen radial inneren Teil des Rückschlussbleches und am entgegen gesetzten Ende durch einen radial inneren Teil des Joches begrenzt. Das Einspritzen des Kunststoffs verläuft dabei derart, dass ein Spritzwerkzeug in den Spulenträger geführt wird, dem das Rückschlussblech und das Joch als Anlagepunkte dienen. Entsprechend passt sich bei einer derartigen Vorgehensweise die Gleitlagerbuchse automatisch der Fluchtung zwischen dem Joch und dem Rückschlussblech an, wodurch vorher entstandene Form- und Lagetoleranzen eliminiert werden. Auch entfallen teure Drehteile wie die Stahlbuchse oder die DU-Buchse, welche sonst als Verstärkungen dienen.

In einer hierzu weiterführenden Ausführungsform des Elektromagnetventils bzw. einem weiterführenden Verfahren zur Herstellung eines derartigen Elektromagnetventils wird der Kern in die gespritzte Gleitlagerbuchse eingepresst, wodurch ein sehr geringer Koaxialfehler zwischen dem Kern und dem Anker sichergestellt wird, so dass erneut Radialkräfte zwischen den magnetischen Teilen zuverlässig vermieden werden.

In einer hierzu alternativen Ausführungsform bzw. einem alternativen Fertigungsverfahren wird der Kern durch das Einspritzen der Gleitlagerbuchse befestigt. Auch hierdurch wird die Stellung des Ankers zum Kern eindeutig definiert, wobei zusätzlich ein weiterer Fertigungsschritt entfällt.

In einer weiterführenden Ausführungsform sind das Joch und das Rückschlussblech Tiefziehteile. Derartige Teile sind sehr kostengünstig herzustellen, insbesondere da in der erfindungsgemäßen Ausführung keine hohen Anforderungen bezüglich der Toleranzen des Jochs bzw. des Rückschlussbleches berücksichtigt werden müssen, da die Führung in Form der Gleitlagerbuchse sich automatisch diesen Toleranzen anpasst.

Vorzugsweise weisen das Joch und das Rückschlussblech radial innen liegende zylinderförmige Abschnitte auf, welche sich von den entgegengesetzten axialen Enden des Spulenträgers zumindest teilweise in den zylinderförmigen Hohlraum des Spulenträgers erstrecken. Entsprechend wird es bevorzugt, wenn diese zylinderförmigen Abschnitte als Fluchtungspunkte zum Einspritzen der Gleitlagerbuchse dienen. Die zylinderförmigen Abschnitte dienen somit als Anschlag- und Auflageflächen für den Spritzkern sowie definierte axiale Enden der Gleitlagerbuchse. Auch wird die Kontaktfläche zum Anker bzw. zum Kern vergrößert.

Bei Wahl eines entsprechenden Kunststoffs kann die Lagerbuchse als Gleitlager des Ankers dienen. Hierdurch entfallen zusätzliche Fertigungsschritte und Bauteile, so dass das Elektromagnetventil kostengünstig hergestellt werden kann.

Alternativ ist radial innerhalb der Lagerbuchse eine zusätzliche Gleitlagerbuchse angeordnet, wodurch die Gleiteigenschaften, falls es erforderlich ist zusätzlich verbessert werden können, ohne auf den Koaxialausgleich durch die Lagerbuchse verzichten zu müssen. Die Gleitlagerbuchse wird hierzu in die Lagerbuchse eingepresst oder eingedrückt.

In einer weiteren alternativen Ausführungsform ist zur Verbesserung der Gleiteigenschaften der Anker mit einer Gleitfolie oder einem Gleitlack beschichtet. Dieser Gleitlack wird in einem weiteren Fertigungsschritt auf den Anker aufgebracht.

Ein derartiges Verfahren zur Herstellung des Elektromagnetventils ist mit einfachen Mitteln und im Vergleich zu bekannten Herstellverfahren sehr kostengünstig durchzuführen. Das Elektromagnetventil weist weniger und einfach herzustellende Bauteile auf, wobei gleichzeitig die auftretenden Quer- bzw. Radialkräfte weitestgehend minimiert werden, wodurch sich ein kleinerer Verschleiß und eine höhere Lebensdauer einstellen.

Ein Ausführungsbeispiel sowie ein Ventil gemäß des Standes der Technik sind in den Zeichnungen dargestellt und werden nachfolgend beschrieben.
Figur 1 zeigt einen elektromagnetischen Kreis eines elektropneumatischen Druckwandlers nach dem Stand der Technik in Seitenansicht und geschnittener Darstellung.
Figur 2 zeigt eine Seitenansicht eines elektromagnetischen Kreises eines erfindungsgemäßen Elektromagnetventils am Beispiel eines elektropneumatischen Druckwandlers in geschnittener Darstellung.
Figur 3 zeigt eine Seitenansicht eines zu Figur 2 alternativen elektromagnetischen Kreises eines erfindungsgemäßen Elektromagnetventils am Beispiel eines elektropneumatischen Druckwandlers in geschnittener Darstellung.
Figur 4 zeigt eine Seitenansicht eines weiteren zu Figur 2 und 3 alternativen elektromagnetischen Kreises eines erfindungsgemäßen Elektromagnetventils am Beispiel eines elektropneumatischen Druckwandlers in geschnittener Darstellung.

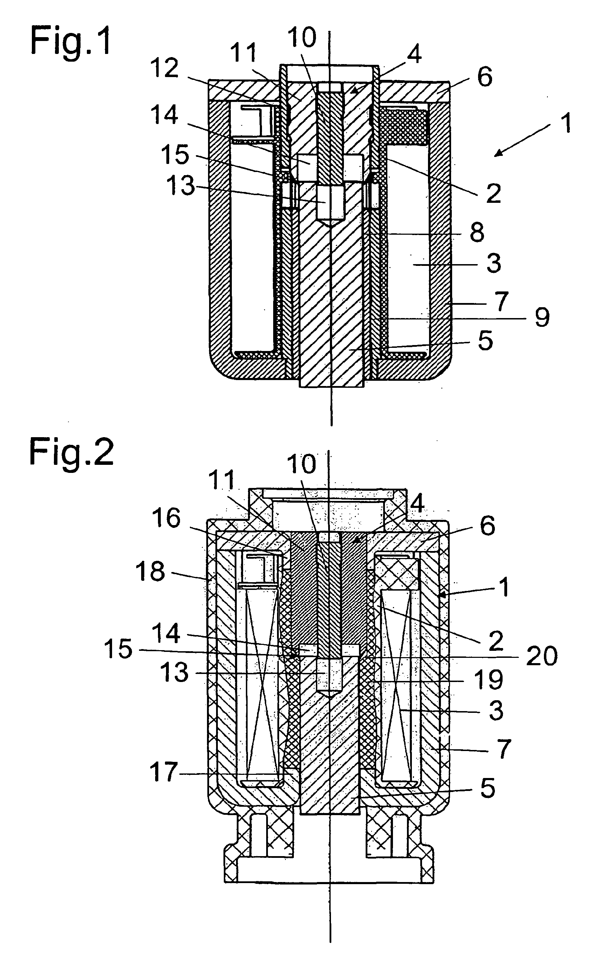

Der in Figur 1 dargestellte elektromagnetische Kreis 1 eines Elektromagnetventils, welches hier als elektropneumatischer Wandler ausgeführt ist, besteht aus einem Spulenträger 2, auf den eine Spule 3 gewickelt ist sowie einem im Innern des Spulenträgers 2 fest angeordneten Kern 4, welcher in magnetischer Verbindung zu einem ebenfalls im Innern des Spulenträgers 2 angeordneten beweglichen Anker 5 steht. Der elektromagnetische Kreis 1 wird durch ein Rückschlussblech 6 an einem ersten axialen Ende des Spulenträgers 2 sowie ein Joch 7 geschlossen.

Das Joch 7 umgibt den Spulenträger 2 mit der darauf gewickelten Spule 3. Der Anker 5 ist in einer Gleitlagerbuchse 8 verschiebbar angeordnet, welche als DU-Buchse ausgeführt ist. Diese DU-Buchse 8 liegt radial innerhalb und koaxial zu einer Stahlbuchse 9, welche wiederum mit ihrem Außenumfang am Spulenträger 2 anliegt und zur Festigkeitserhöhung vor dem Einbau der DU-Buchse 8 in den Spulenträger eingepresst wird.

Der Kern 4 ist zweiteilig ausgeführt und besteht aus einem inneren Kernstück 10 sowie einem das innere Kernstück 10 radial umgebenden und koaxial dazu liegenden äußeren Kernstück 11, welches wiederum von einer Gewindebuchse 12 umgeben ist, die wiederum koaxial zum Kern 4 ist und deren Außenfläche am Spulenträger 2 anliegt. Die Gewindebuchse 12 weist ein Innengewinde auf, welches mit einem Außengewinde des äußeren Kernstücks 11 zusammenwirkt. In gleicher Weise weist das äußere Kernstück 11 ein Innengewinde auf, welches mit einem Außengewinde des inneren Kernstücks 10 zusammenwirkt, wobei das innere Kernstück in eine entsprechende kreisförmige Ausnahme 13 des Ankers 5 reicht. Auch das äußere Kernstück 11 weist am zum Anker 5 gelegenen Ende eine kreisförmige Ausnehmung 14 auf, deren Durchmesser geringfügig größer ist als der Außendurchmesser des Ankers 5, so dass dieser beim Betätigen des Elektromagneten geringfügig in die Ausnehmung 14 eintauchen kann. Diese Ausnehmungen dienen der Bündelung der elektromagnetischen Feldlinien.

Die Gewindebuchse 12 ist fest mit dem Rückschlussblech 6 beispielsweise durch Einpressen verbunden. Dieses Rückschlussblech 6 wiederum weist eine Verbindung zum Joch 7 auf, welches seinerseits wiederum einen Presssitz zur Stahlbuchse 9 aufweist. Entsprechend verlaufen die elektromagnetischen Feldlinien, welche durch Bestromen der Spule 3 entstehen, durch den Anker 5 und den Kern 4 entlang des Rückschlussbleches 6 und des Jochs 7.

Im nicht bestromten Zustand besteht zwischen dem Anker 5 und dem Kern 4 ein Spalt 15, in dem bei Bestromen der Spule 3 ein magnetisches Feld erzeugt wird, welches eine Axialbewegung des Ankers 5 zur Folge hat. Entsprechend wird das zum Kern 4 entgegengesetzte axiale Ende des Ankers 5 bei Bestromen der Spule 3 von einem hier nicht dargestellten Ventilsitz abgehoben. Die weiteren Funktionen des elektropneumatischen Wandlers sind für die vorliegende Erfindung unerheblich. Entsprechend sei auf den zitierten Stand der Technik verwiesen. Wesentlich ist hier die Möglichkeit, durch Bewegung des Ankers 5 ein mit diesem gekoppeltes Verschlussglied zu bewegen, wodurch eine fluidische Verbindung zwischen einem nicht dargestellten Einlasskanal und Auslasskanal hergestellt werden kann.

Die Zweiteiligkeit des Kerns 4 dient zur Verstellung des Luftspaltes zwischen dem Anker 5 und dem Kern 4 und somit zur Verstellung der magnetischen Kenngröße, wodurch sich die Kraftwirkung auf den Anker 5 einstellen lässt. Dabei bewirkt eine Verdrehung des äußeren Kernstücks 11 eine relativ hohe Änderung der entstehenden Kraft während das Eindrehen des zweiten Kernstücks 10 der Feinjustierung dient.

Es wird jedoch deutlich, dass bei einem leichten axialen Versatz des Kerns 4 zum Anker 5 also bei Auftreten eines Koaxialfehlers der Stellung des Ankers 5 zum Kern 4 erhöhte Radialkräfte auftreten, wodurch die Axialkräfte gemindert werden und ein höherer Verschleiß aufgrund der nicht exakt geraden Bewegung des Ankers 5 in der DU-Buchse 8 auftritt. Man erkennt auch, dass durch das Einpressen der DU-Buchse 8, deren Form unveränderbar ist, in die Stahlbuchse 9, eventuell vorher aufgetretene Koaxialfehler beim Zusammenbau des Spulenträgers 2 mit der Stahlbuchse 9, dem Joch 7 sowie dem Rückschlussblech 6 nicht mehr ausgeglichen werden können.

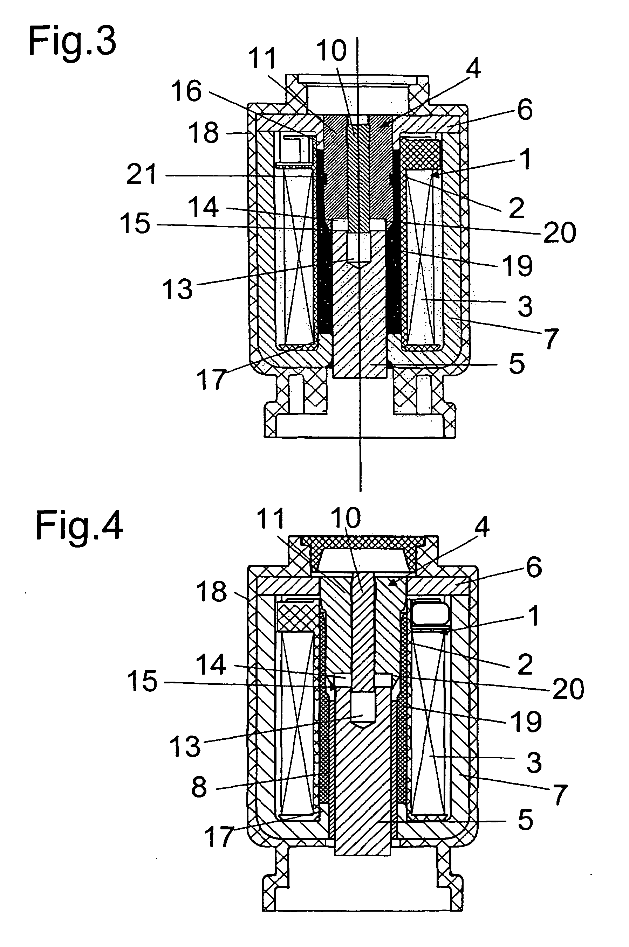

Entsprechend wird vorgeschlagen bei den Elektromagnetventilen gemäß der Figuren 2 und 3 zunächst den Spulenträger 2 zu bewickeln und anschließend das Joch 7 sowie das Rückschlussblech 6 mit dem Spulenträger zu verbinden. Hierzu sind das Joch 7 sowie das Rückschlussblech 6 als Tiefziehteile ausgebildet, welche zur Herstellung der notwendigen Stabilität des elektromagnetischen Kreises 1 vor dem Einbau des Kerns 4 und des Ankers 5 zum Innern des Spulenträgers 2 gebogen sind. Dies bedeutet, dass an dem axialen Ende des Spulenträgers 2, an dem der Kern 4 eingebaut wird, das Rückschlussblech 6 an seinem inneren Durchmesser zylinderförmig gebogen ist, wobei der zylinderförmige Abschnitt 16 fest an der Innenwand des sich axial erstreckenden zylinderförmigen Hohlraumes des Spulenträgers 2 anliegt und sich in Richtung zum Anker 4 erstreckt.

In gleicher Weise weist am entgegengesetzten Ende des Spulenträgers 2 das Joch 7 einen zylinderförmigen Abschnitt 17 auf, der sich ebenfalls in den sich axial erstreckenden zylinderförmigen Hohlraum des Spulenträgers 2 erstreckt und an der Innenwand des Spulenträgers 2 anliegt. Der zylinderförmigen Abschnitt 17 erstreckt sich in Richtung zum Kern 4.

Nach diesem beschriebenen Zusammenbau der Teile des elektromagnetischen Kreises 1 kann auch ein Umspritzen dieser Teile des elektromagnetischen Kreises 1 erfolgen, wodurch ein Gehäuse 18 gebildet wird, welches den elektromagnetischen Kreis zumindest radial umgibt und in dem auch Stutzen für Ein- oder Auslässe gebildet werden können.

Sind diese Verfahrensschritte erfolgt, wird der Spulenträger 2 anschließend nicht mehr mechanisch oder thermisch belastet. Nun ist es möglich, eine Lagerbuchse 19 herzustellen, indem zunächst in den Bereich zwischen den beiden zylinderförmigen Abschnitten 16 und 17 des Joches 7 bzw. des Rückschlussbleches 6 ein entsprechend geformter Spritzkern eingeschoben wird, der sich mit seiner Außenfläche gegen die zylinderförmigen Abschnitte 16, 17 des Jochs 7 und des Rückschlussbleches 6 anlegt und anschließend Kunststoff in den Hohlraum zwischen dem Spritzkern und dem Spulenträger 2 eingespritzt wird, so dass die entstehende Lagerbuchse 19 mit ihrem äußeren Umfang gegen den Spulenträger 2 anliegt und mit ihren axialen Enden gegen das Rückschlussblech 6 und das Joch 7 anliegt.

Die entstehende Lagerbuchse 19 passt sich durch diese Vorgehensweise der Fluchtung zwischen dem Joch 7 und dem Rückschlussblech 6 an und gleicht auch Unebenheiten im sich axial erstreckenden zylinderförmigen Hohlraum des Spulenträgers 2 automatisch aus. Zusätzlich dient diese Lagerbuchse 19 auch als Gleitlager für den Anker, wobei zusätzliche stabilisierende Buchsen nicht mehr erforderlich sind.

Die radiale Innenfläche der Lagerbuchse 19 weist dabei ebenso wie der bei der Herstellung eingesetzte Spritzkern einen Absatz 20 auf, welcher etwa in der Höhe angeordnet ist, in der das zum Anker 5 gerichtete Ende des Kerns 4 liegt. Nach Einspritzen dieser Lagerbuchse 19 kann nun der Anker 5 eingeschoben werden.

Bei einer Ausführung gemäß der Figur 2 wird der Kern 4 in die Lagerbuchse 19 eingepresst. Ein weiterer Vorteil ergibt sich, wenn der Kern 4 direkt in einem Fertigungsschritt beim Spritzen der Lagerbuchse 19 mit eingespritzt wird, wie es in Figur 3 dargestellt ist. Bei einer derartigen Ausführung ist es vorteilhaft, wenn der Kern 4 eine Umfangsnut 21 aufweist, in die sich der Kunststoff der Lagerbuchse 19 beim Einspritzen setzen kann, so dass die Lage des Kerns 4 axial zusätzlich fixiert ist.

Reichen die Gleiteigenschaften des Kunststoffs für bestimmte Anwendungen nicht aus, so kann, wie in Figur 4 dargestellt, in die Lagerbuchse 19 eine zusätzliche Gleitlagerbuchse 8 eingedrückt oder eingepresst werden. Bei einer derartigen Ausführung bleibt die Koaxialität zwischen Kern 4 und Anker 5 sichergestellt. Im Vergleich zu eingezogenen Stahlbuchsen bleibt der Vorteil der günstigeren Fertigung und der Möglichkeit nach dem Zusammenbau des Ventils auch bei vorhandenen Hinterschnitten die Lagerbuchse 19 einzusetzen, so dass ein nachträglicher Verzug ausgeschlossen werden kann.

In der Ausführung gemäß Figur 4 wird auch deutlich, dass das Rückschlussblech 6 nicht notwendigerweise als axialer Anschlag für die Lagerbuchse 19 dienen muss. Bei Verwendung eines entsprechenden Spritzkems kann die Lagerbuchse 19 auch kürzer ausgeführt werden, wobei die Befestigung des Kerns 4 in der Lagerbuchse 19 erfolgen muss. Der weitere Aufbau des Elektromagnetventils entspricht dem der Figur 2, so dass gleiche Bezugszeichen verwendet werden.

Im Vergleich zu dem in Figur 1 dargestellten Beispiel wird deutlich, dass sowohl die Anzahl der Fertigungsschritte als auch der verwendeten Teile deutlich reduziert werden, wobei gleichzeitig ein Koaxialfehler zwischen Kern 4 und Anker 5 zuverlässig vermieden wird. Dies führt zu einem geringeren Verschleiß am Ventil und zu Verhinderung unerwünschter Radialkräfte. Beim Zusammenbau entstandene Form- und Lagetoleranzen des Rückschlussblechs 6 bzw. des Jochs 7 und somit des Kerns 4 zum Anker 5 werden zuverlässig ausgeglichen.

Es sollte deutlich sein, dass ein derartiges Elektromagnetventil viele verschiedene Funktionen ausführen kann, wobei ein derartiger Aufbau insbesondere bei einer notwendigen Regelung, also einer Verwendung eines derartigen Ventils als Steuerventil, bei dem die Querkräfte möglichst vollständig verhindert werden müssen, sinnvoll ist. Entsprechend ist es denkbar, die Ausführungen des Jochs bzw. des Rückschlussbleches oder auch des Spulenträgers anders zu wählen, jedoch sollte erfindungsgemäß das Einspritzen des Kunststoffs in das bis auf Anker und Kern fertig zusammengebaute Ventil erfolgen.

## Patentansprüche

1. Elektromagnetventil mit einem Gehäuse und einem elektromagnetischen Kreis, der aus einer auf einen Spulenträger gewickelten Spule, einem Anker, einem Kern, einem Rückschlussblech und einem Joch besteht, wobei der bewegliche Anker radial innerhalb des Spulenträgers angeordnet und gelagert ist und zumindest indirekt mit einem Verschlussglied verbunden ist, welches einen Ventilsitz zwischen einem Einlasskanal und einem Auslasskanal beherrscht, wobei der Anker und der Kern radial innerhalb einer Lagerbuchse angeordnet sind, die radial innerhalb des Spulenträgers angeordnet ist, **dadurch gekennzeichnet, dass** die Lagerbuchse (19) durch in den bewickelten Spulenträger (2) und axial gegen das Joch (7) eingespritzten Kunststoff gebildet ist.

2. Elektromagnetventil nach Anspruch 1, **dadurch gekennzeichnet, dass** die Lagerbuchse (19) axial an einem ersten Ende durch einen radial inneren Teil des Rückschlussbleches (6) und am entgegen gesetzten Ende durch einen radial inneren Teil des Joches (7) begrenzt ist.

3. Elektromagnetventil nach Anspruch 1 oder 2, **dadurch gekennzeichnet, dass** der Kern (4) in die Lagerbuchse (19) eingepresst ist.

4. Elektromagnetventil nach Anspruch 1 oder 2, **dadurch gekennzeichnet, dass** der Kern (4) durch das Einspritzen der Lagerbuchse (19) befestigt ist.

5. Elektromagnetventil nach einem der vorhergehenden Ansprüche, **dadurch gekennzeichnet, dass** das Joch (7) und das Rückschlussblech (6) Tiefziehteile sind.

6. Elektromagnetventil nach einem der vorhergehenden Ansprüche, **dadurch gekennzeichnet, dass** das Joch (7) und das Rückschlussblech (6) radial innen liegende zylinderförmige Abschnitte (16, 17) aufweisen, welche sich von den entgegengesetzten axialen Enden des Spulenträgers (2) zumindest teilweise in den zylinderförmigen Hohlraum des Spulenträgers (2) erstrecken.

7. Elektromagnetventil nach einem der vorhergehenden Ansprüche, **dadurch gekennzeichnet, dass** die Lagerbuchse (19) als Gleitlager des Ankers (5) dient.

8. Elektromagnetventil nach einem der Ansprüche 1 bis 6, **dadurch gekennzeichnet, dass** radial innerhalb der Lagerbuchse (19) eine Gleitlagerbuchse (8) angeordnet ist.

9. Elektromagnetventil nach einem Ansprüche 1 bis 6, **dadurch gekennzeichnet, dass** der Anker (5) mit einer Gleitfolie oder einem Gleitlack beschichtet ist.

10. Verfahren zur Herstellung eines Elektromagnetventils mit einem Gehäuse und einem elektromagnetischen Kreis, der aus einer auf einen Spulenträger gewickelten Spule, einem Anker, einem Kern, einem Rückschlussblech und einem Joch besteht, **dadurch gekennzeichnet, dass** eine Lagerbuchse (19) nach dem Wickeln der Spule (3) auf den Spulenträger (2) und dem Zusammenbau von Spulenträger (2), Joch (7) und Rückschlussblech (6) durch Einspritzen von Kunststoff in den Spulenträger (2) hergestellt wird und der Anker (4) und der Kern (5) anschließend radial innerhalb der Lagerbuchse (19) angeordnet werden.

11. Verfahren zur Herstellung eines Elektromagnetventils nach Anspruch 10, **dadurch gekennzeichnet, dass** zylinderförmige Abschnitte (16, 17) des Jochs (7) bzw. des Rückschlussblechs (6) als Fluchtungspunkte zum Einspritzen der Lagerbuchse (19) dienen.

12. Verfahren zur Herstellung eines Elektromagnetventils nach Anspruch 10 oder 11, **dadurch gekennzeichnet, dass** der Kern (4) in die gespritzte Lagerbuchse (19) gepresst wird.

13. Verfahren zur Herstellung eines Elektromagnetventils nach Anspruch 10 oder 11, **dadurch gekennzeichnet, dass** der Kern (4) durch das Einspritzen der Lagerbuchse (19) befestigt wird.

14. Verfahren zur Herstellung eines Elektromagnetventils nach einem der Ansprüche 10 bis 13, **dadurch gekennzeichnet, dass** in die Lagerbuchse (19) eine Gleitlagerbuchse (8) eingepresst oder eingedrückt wird.

15. Verfahren zur Herstellung eines Elektromagnetventils nach einem der Ansprüche 10 bis 13, **dadurch gekennzeichnet, dass** der Anker (5) mit einer Gleitfolie oder einem Gleitlack überzogen wird.

## Claims

1. An electromagnetic valve comprising a housing and an electromagnetic circuit formed by a coil wound on a coil support, an armature, a core, a back iron and a yoke, said mobile armature being arranged and supported radially inside the coil support and being connected at least indirectly with a closing member that controls a valve seat between an inlet channel and an outlet channel, the armature and the core being arranged radially inside a bearing bushing which is arranged radially inside said coil support, **characterized in that** the bearing bushing (19) is formed by plastic material injected into the wound coil support (2) and axially against the yoke (7).

2. The electromagnetic valve of claim 1, **characterized in that** the bearing bushing (19) is defined axially at a first end by a radially inner part of the back iron (6) and, at the opposite end, by a radially inner part of the yoke (7).

3. The electromagnetic valve of claim 1 or 2, **characterized in that** the core (4) is pressed into the bearing bushing (19)

4. The electromagnetic valve of claim 1 or 2, **characterized in that** the core (4) is fixed by the injection of the bearing bushing (19).

5. The electromagnetic valve of one of the preceding claims, **characterized in that** the yoke (7) and the back iron (6) are deep-drawn parts.

6. The electromagnetic valve of one of the preceding claims, **characterized in that** the yoke (7) and the back iron (6) comprise radially inner cylindrical sections (16, 17) that extend from the opposite axial ends of the coil support (2) at least partly into the cylindrical cavity of the coil support (2).

7. The electromagnetic valve of one of the preceding claims, **characterized in that** the bearing bushing (19) serves as a sliding bearing of the armature (5).

8. The electromagnetic valve of one of claims 1 to 6, **characterized in that** a sliding bearing bushing (8) is arranged radially inside the bearing bushing (19).

9. The electromagnetic valve of one of claims 1 to 6, **characterized in that** the armature (5) is coated with a sliding film or a sliding lacquer.

10. A method for manufacturing an electromagnetic valve comprising a housing and an electromagnetic circuit formed by a coil wound on a coil support, an armature, a core, a back iron and a yoke, **characterized in that**, after the coil (3) has been wound on the coil support (2) and after the assembly of the coil support (2), the yoke (7) and the back iron (6), a bearing bushing (19) is formed by injecting plastic material into the coil support (2) and by subsequently arranging the armature (5) and the core (4) radially inside the bearing bushing (19).

11. The method for manufacturing an electromagnetic valve as defined in claim 10, **characterized in that** cylindrical sections (16, 17) of the yoke (7) and the back iron (6), respectively, serve as alignment points for the injection of the bearing bushing (19).

12. The method for manufacturing an electromagnetic valve as defined in claim 10 or 11, **characterized in that** the core (4) is pressed into he injected bearing bushing (19).

13. The method for manufacturing an electromagnetic valve as defined in claim 10 or 11, **characterized in that** the core (4) is fixed by the injection of the bearing bushing (19).

14. The method for manufacturing an electromagnetic valve as defined in one of claims 10 to 13, **characterized in that** a sliding bearing bushing (8) is pressed or pushed into the bearing bushing (19).

15. The method for manufacturing an electromagnetic valve as defined in one of claims 10 to 13, **characterized in that** the armature (5) is covered with a sliding film or a sliding lacquer.

## Revendications

1. Soupape électromagnétique comprenant un boitier et un circuit électromagnétique formé par une bobine enroulée sur un support de bobine, un induit, un noyau, une tôle de reflux et une culasse, ledit induit mobil étant disposé et supporté radialement dans ledit support de bobine et est connecté, au moins indirectement, à un élément de fermeture qui contrôle un siège de soupape entre un canal d'entrée et un canal de sortie, ledit induit et ledit noyau étant disposés radialement dans un coussinet disposé radialement dans ledit support de bobine, **caractérisée en ce que** ledit coussinet (19) est formé en matière plastique injectée dans le support de bobine (2) bobiné et axialement contre ladite culasse (7).

2. Soupape électromagnétique selon la revendication 1, **caractérisée en ce que** le coussinet (19) est délimité axialement à une première extrémité par une partie radialement interne de la tôle de reflux (6) et, à l'extrémité opposée, par une partie radialement interne de ladite culasse (7).

3. Soupape électromagnétique selon la revendication 1 ou 2, **caractérisée en ce que** ledit noyau (4) est pressé dans ledit coussinet (19).

4. Soupape électromagnétique selon la revendication 1 ou 2, **caractérisée en ce que** ledit noyau (4) est fixé par l'injection du coussinet (19).

5. Soupape électromagnétique selon l'une quelconque des revendications précédentes, **caractérisée en ce que** la culasse (7) et la tôle de reflux (6) sont des éléments emboutis.

6. Soupape électromagnétique selon l'une quelconque des revendications précédentes, **caractérisée en ce que** la culasse (7) et la tôle de reflux (6) comprennent des zones cylindriques (16, 17) radialement internes qui s'étendent à partir des extrémités axiales opposées dudit support de bobine (2) au moins partiellement dans le creux cylindrique dudit support de bobine (2).

7. Soupape électromagnétique selon l'une quelconque des revendications précédentes, **caractérisée en ce que** ledit coussinet (19) sert de palier de glissement dudit induit (5).

8. Soupape électromagnétique selon l'une quelconque des revendications 1 à 6, **caractérisée en ce qu'**un coussinet de glissement (8) est disposé radialement à l'intérieur du coussinet (19).

9. Soupape électromagnétique selon l'une quelconque des revendications 1 à 6, **caractérisée en ce que** ledit induit (5) est recouvert d'un film de glissement ou d'un vernis de glissement.

10. Procédé de production d'une soupape électromagnétique comprenant un boitier et un circuit électromagnétique formé par une bobine enroulée sur un support de bobine, un induit, un noyau, une tôle de reflux et une culasse, **caractérisé en ce qu'**après l'enroulement de la bobine (3) sur ledit support de bobine (2) et l'assemblage dudit support de bobine, de la culasse (7) et de la tôle e reflux (6), un coussinet (19) est fait par injection de matière plastique dans ledit support de bobine (2), et que l'induit (4) et le noyau (5) sont après disposés radialement à l'intérieure du coussinet (19).

11. Procédé de production d'une soupape électromagnétique selon la revendication 10, **caractérisé en ce que** des zones cylindriques (16, 17) de la culasse (7) et de la tôle de reflux (6) respectivement servent de points d'alignement pour l'injection du coussinet (19).

12. Procédé de production d'une soupape électromagnétique selon la revendication 10 ou 11, **caractérisé en ce que** le noyau (4) est pressé dans ledit coussinet (19) injecté.

13. Procédé de production d'une soupape électromagnétique selon la revendication 10 ou 11, **caractérisé en ce que** le noyau (4) est fixé par l'injection du coussinet (19).

14. Procédé de production d'une soupape électromagnétique selon l'une quelconque des revendications 10 à 13, **caractérisé en ce qu'**un coussinet à glissement (8) est pressé ou injecté dans ledit coussinet (19).

15. Procédé de production d'une soupape électromagnétique selon l'une quelconque des revendications 10 à 13, **caractérisé en ce que** ledit induit (5) est recouvert avec un film de glissement ou un vernis de glissement.
